# FASCICULE DE BREVET EUROPEEN

(11) **EP 4 703 259 B1**
(45) Date de publication et mention de la délivrance du brevet: **11.11.2026**
(21) Numéro de dépôt: 25171974.6
(22) Date de dépôt: 23.04.2025
(51) Int. Cl.: B64C 1/14, E05B 41/00, B64D 45/00, E05B 47/00

(54) **SYSTÈME DE VERROUILLAGE D'UNE PORTE D'AÉRONEF COMPRENANT UN SYSTÈME DE SURVEILLANCE SIGNALANT SI LE SYSTÈME DE VERROUILLAGE EST DANS UN ETAT VERROUILLÉ OU DÉVERROUILLÉ**
VERRIEGELUNGSSYSTEM FÜR EINE FLUGZEUGTÜR MIT EINEM ÜBERWACHUNGSSYSTEM, DASS DAS VERRIEGELUNGSSYSTEM IN EINEM VERRIEGELTEN ODER ENTRIEGELTEN ZUSTAND SIGNALT
AIRCRAFT DOOR LOCK SYSTEM HAVING A MONITORING SYSTEM WHICH INDICATES WHETHER THE LOCK SYSTEM IS IN A LOCKED OR UNLOCKED STATE

(30) Priorité: 30.08.2024 FR 2409276
(43) Date de publication de la demande: 04.03.2026
(73) Titulaire: Airbus Helicopters, 13725 Marignane Cedex (FR)
(72) Inventeur: HUGUET, Fleur, 83000 TOULON (FR); FRUITET, Pierre, 30170 POMPIGNAN (FR); GAIA, Lilian, 13340 ROGNAC (FR); DARGNAT, Jérôme, 13105 MIMET (FR)
(74) Mandataire: GPI Brevets

(56) Documents cités:
- EP-B1- 3 495 269
- EP-B1- 3 556 656
- US-A1- 2003 038 713
- US-A1- 2023 265 687

## Description

La présente invention concerne un système de verrouillage d'une porte d'aéronef comprenant un système de surveillance signalant si le système de verrouillage est dans un état verrouillé ou déverrouillé.

Une porte d'aéronef est mobile par rapport à un portant entre une position ouverte et une position fermée. La porte est usuellement munie d'un système de verrouillage pour maintenir la porte dans la position fermée. Un tel système de verrouillage comporte conventionnellement une serrure.

Des règlements de certification d'aéronefs imposent la mise en place de moyens pour vérifier visuellement qu'une porte donnant sur l'extérieur de l'aéronef est verrouillée dans la position fermée, à savoir pour vérifier que le système de verrouillage verrouille la porte dans cette position fermée. Par exemple, le chapitre 783 du règlement CS29 comporte une telle exigence.

Des systèmes mécaniques peuvent ainsi être implémentés sur des hélicoptères, et plus généralement sur des aéronefs. Par exemple, un tel système mécanique comporte un organe mobile muni d'une zone de couleur verte visible quand le système de verrouillage est verrouillé, et d'une zone de couleur rouge visible quand le système de verrouillage est déverrouillé. Bien qu'efficace, ces systèmes sont soumis à une usure, due par exemple aux vibrations et aux accélérations subies. En outre, certains systèmes mécaniques peuvent donner une information ambiguë lorsque la porte est entrouverte, en montrant conjointement une partie des zones verte et rouge par exemple.

Le document CN205604874U et le document JP2010127065A décrivent des systèmes mécaniques.

Un autre système de signalisation connu comporte un microcontacteur en liaison avec un panneau d'alarme. Lorsque la porte associée est ouverte, le microcontacteur est ouvert ce qui génère une alarme affichée par le panneau d'alarme. Lorsque la porte est fermée, le microcontacteur se ferme et l'alarme disparait.

Un autre système de signalisation comporte un microcontacteur associé à un verrou pour déclencher une alarme si le verrou n'est pas enclenché.

Le document WO2024055500 A1 décrit un système ayant un microcontacteur connecté à un système de signalisation signalant le statut fermé d'un mécanisme de fermeture de porte. Ce système de signalisation peut comporter une source de lumière agencée dans un cockpit d'un hélicoptère.

Le document CN117513877A décrit un dispositif pour une porte de cabine d'hélicoptère comprenant : une unité de contrôle, une unité d'affichage, une unité de commande, un mécanisme de verrouillage, un système d'actionnement de verrouillage, un système d'actionnement de porte de cabine, un signaleur de verrouillage de porte de cabine en position fermée émettant le cas échéant un signal de verrouillage de porte, un signaleur de verrouillage de porte de cabine en position ouverte émettant le cas échéant un signal de déverrouillage de porte, un capteur de position de porte de cabine fermée émettant le cas échéant un signal de porte fermée, et un capteur de position ouverte de porte de cabine émettant le cas échéant un signal de verrouillage de porte ouverte.

Quand le capteur de position de porte de cabine fermée émet un signal de porte fermée, l'unité de commande envoie une commande de verrouillage au système d'actionnement de verrouillage qui verrouille la porte. Le signaleur de verrouillage de porte de cabine en position fermée détecte le verrouillage et envoie un signal de verrouillage de porte à l'unité de commande qui transmet alors un signal à l'unité d'affichage pour signaler le verrouillage.

Le document KR970054097U décrit un système pour détecter l'ouverture d'une porte. Ce système comporte : i) un hacheur configuré pour convertir une tension électrique en une tension d'impulsion ayant un cycle prédéterminé, ii) une pluralité d'interrupteurs de porte dont l'état de commutation est contrôlé selon que la porte est ouverte ou fermée, et iii) un témoin d'avertissement de tableau de bord configuré pour recevoir un courant électrique présentant une tension d'impulsion fournie par le hacheur lorsqu'au moins un interrupteur de porte est activé et pour s'allumer selon un cycle prédéterminé.

Le document US 2003/038713 A1 se rapporte quant à lui à un système d'indication d'avertissement et un procédé d'utilisation de celui-ci en conjonction avec une porte de chargement d'un aéronef à ouverture vers le haut.

Le procédé comprend l'émission de signaux lorsque la porte de chargement est en position fermée ; l'émission de signaux lorsque la porte de chargement est en position fermée et verrouillée par un loquet; et l'émission de signaux lorsque la porte de chargement est en position fermée, verrouillée par un loquet et verrouillée par une serrure.

Les documents US 2023/265687 A1, EP 3 495 269 B1, et EP 3 556 656 B1 sont quant à eux éloignés de l'invention.

La présente invention a alors pour objet de proposer un système de signalisation innovant signalant de manière fiable et simple si un système de verrouillage est dans une position verrouillée ou déverrouillée.

L'invention vise ainsi un système de verrouillage pour verrouiller une porte dans une position fermée par rapport à un portant, le système de verrouillage comprenant au moins deux serrures aptes chacune à immobiliser la porte dans la position fermée, le système de verrouillage ayant un système de signalisation.

Le système de signalisation comporte un senseur de position par serrure, chaque senseur de position émettant un signal de mesure porteur d'un état verrouillé ou d'un état déverrouillé de la serrure associée, le système de signalisation comportant un contrôleur recevant les signaux de mesure et connecté à un alerteur, le contrôleur étant configuré pour émettre soit un signal de déverrouillage lorsqu'au moins un signal de mesure est porteur d'un état déverrouillé de la serrure associée soit un signal de verrouillage si chaque signal de mesure est porteur d'un état verrouillé de la serrure associée, l'alerteur générant une alerte de déverrouillage visuelle suite à la réception du signal de déverrouillage et une alerte de verrouillage visuelle suite à la réception du signal de verrouillage, l'alerte de verrouillage étant différente de l'alerte de déverrouillage.

Le terme « serrure » désigne un mécanisme de fermeture coopérant avec un organe complémentaire d'un portant pour verrouiller la porte. Par exemple, la serrure comporte un crochet pouvant serrer un organe du portant, ou un pêne insérable dans une gâche.

Ainsi, le système de verrouillage comporte plusieurs senseurs de position, à savoir un senseur de position pour chaque serrure. Chaque senseur de position indique au contrôleur si la serrure associée est verrouillée ou déverrouillée, à savoir pour évaluer si la serrure associée est verrouillée à un portant pour immobiliser la porte, ou n'est pas verrouillée au portant.

Si un ou des senseurs de position indiquent au contrôleur que la serrure associée n'est pas verrouillée, le contrôleur génère l'alerte de déverrouillage. Si chaque senseur de position indique au contrôleur que la serrure associée est verrouillée, le contrôleur génère l'alerte de verrouillage.

Chaque alerte prend la forme d'une alerte visuelle, par exemple par le biais d'une lumière émise par une source de lumière telle qu'une diode électroluminescente ou une sortie de fibre optique éventuellement.

Un opérateur peut alors constater visuellement si toutes les serrures sont verrouillées ou si au moins une serrure est déverrouillée.

Ainsi, le système de signalisation s'avère simple, et/ou peut avoir une masse relativement faible. Le système de signalisation peut en outre être utilisé de nuit ou lors de conditions climatiques délicates. Par ailleurs, un tel système de signalisation peut être installé sur un système de verrouillage existant.

Selon l'invention, chaque serrure comporte organe d'immobilisation solidaire d'un doigt coulissant dans une fente d'un châssis de la serrure, l'organe d'immobilisation et le doigt étant uniquement mobiles par rapport au châssis entre une position de libération et une position de blocage, chaque senseur de position émettant un signal de mesure porteur d'un état verrouillé quand le doigt est dans la position de blocage et émettant un signal de mesure porteur d'un état déverrouillé quand le doigt est dans la position de libération.

L'organe d'immobilisation est rendu mobile afin de coopérer dans la position de blocage avec un organe fixe du portant, la porte étant alors verrouillée dans sa position fermée. A l'inverse, lorsque l'organe d'immobilisation est dans sa position de libération, cet organe d'immobilisation est distant de cet organe fixe du portant, la porte n'étant alors pas verrouillée dans la position fermée. Chaque senseur de position peut alors évaluer la position du doigt, image de fait de la position de l'organe d'immobilisation. Un tel senseur de position peut par exemple prendre la forme d'un capteur à effet Hall ou d'un capteur optique usuel.

Le système de signalisation comporte alors des senseurs de position fiables pour évaluer si les serrures sont verrouillées ou non.

Le système de verrouillage peut en outre comprendre une ou plusieurs des caractéristiques qui suivent, prises seules ou en combinaison.

Selon une possibilité compatible avec les précédentes, chaque serrure peut comporter un arbre s'étendant selon un axe de rotation de l'organe d'immobilisation, le senseur de position d'une serrure étant monté sur l'arbre de cette serrure.

Le senseur de position peut ainsi être près du doigt à surveiller. Selon une possibilité compatible avec les précédentes, l'alerteur peut comporter au moins une source de lumière pour générer l'alerte de verrouillage et l'alerte de déverrouillage, l'alerte de verrouillage prenant la forme d'une lumière d'une première couleur et l'alerte de déverrouillage prenant la forme d'une lumière d'une deuxième couleur différente de la première couleur.

L'expression « source de lumière » désigne par la suite un émetteur de lumière, tel que par exemple une diode électroluminescente ou une fibre optique.

Selon un exemple, l'alerteur comporte une source de lumière émettant une lumière verte quand un signal de verrouillage est reçu, et une source de lumière émettant une lumière rouge quand un signal de déverrouillage est émis.

Selon un autre exemple, l'alerteur peut comprendre une source de lumière de verrouillage à allumer en présence d'un signal de verrouillage, et une source de lumière de déverrouillage par senseur de position à allumer lorsque le signal de mesure émis par le senseur de position associé est porteur d'un état déverrouillé.

Ainsi, un opérateur peut évaluer l'état de de chaque serrure.

Selon une possibilité compatible avec les précédentes, le système de verrouillage peut comporter une source d'énergie électrique dédiée alimentant électriquement le système de signalisation.

Le système de signalisation peut alors être autonome et fonctionnel même quand l'aéronef est éteint. Le système de signalisation peut comprendre un indicateur de charge usuel pour indiquer le niveau de charge de la source d'énergie électrique, par exemple une batterie électrique.

Selon une possibilité compatible avec les précédentes, le système de verrouillage peut être autonome et indépendant.

Le terme « autonome » signifie que le système de signalisation peut fonctionner sans une aide extérieure, en comportant par exemple sa propre source d'énergie électrique.

Le terme « indépendant » signifie que le système de signalisation n'est pas lié à un autre système, en particulier au système avionique de l'aéronef.

Ainsi, le système de verrouillage est toujours fonctionnel, que l'aéronef soit à l'arrêt ou en fonctionnement.

Selon une possibilité compatible avec les précédentes, le contrôleur peut être configuré pour émettre le signal de déverrouillage et le signal de verrouillage pendant une durée prédéterminée.

Ainsi, l'alerteur est sollicité pendant une durée limitée. Cette caractéristique permet, par exemple, de maximiser la durée d'utilisation d'une batterie électrique alimentant électriquement le système de signalisation.

Selon une possibilité compatible avec les précédentes, le système de signalisation peut comporter au moins une interface homme-machine en communication avec le contrôleur, le contrôleur étant configuré pour émettre le signal de déverrouillage et le signal de verrouillage à la suite d'une manœuvre de l'interface homme-machine.

Ainsi, un opérateur peut manœuvrer l'interface homme-machine. Cette interface homme-machine émet un signal de commande reçu par le contrôleur. Le contrôleur émet alors le signal de déverrouillage ou le signal de verrouillage adéquat en fonction des signaux de mesure courants pour piloter l'alerteur.

Selon une possibilité compatible avec les précédentes, le contrôleur peut être configuré pour émettre le signal de déverrouillage et le signal de verrouillage à la suite d'une modification d'un signal de mesure.

Par exemple, à chaque changement d'état d'une serrure, une alerte est générée, éventuellement pendant une durée prédéterminée comme expliqué précédemment.

Par ailleurs, une porte peut être munie d'un système de verrouillage selon l'invention.

Eventuellement, l'alerteur est visible de part et d'autre de la porte.

Lorsque cette porte sépare un espace intérieur d'un espace extérieur, l'alerteur est visible de l'espace intérieur et de l'espace extérieur.

La porte peut comporter un système de détection de fermeture muni d'un senseur de fermeture communiquant avec un générateur d'alerte. Par exemple, le senseur de fermeture comporte un microcontacteur relié à un générateur de lumière pour signaler si la porte est fermée. Le système de détection de fermeture peut être indépendant du système de signalisation, et/ou peut être relié au système avionique de l'aéronef.

Par ailleurs, un aéronef peut comporter une telle porte selon l'invention.

Eventuellement, le système de signalisation est indépendant d'un système avionique de l'aéronef.

L'invention et ses avantages apparaîtront avec plus de détails dans le cadre de la description qui suit avec des exemples donnés à titre illustratif en référence aux figures annexées qui représentent :
la figure 1, un schéma illustrant un système de verrouillage selon l'invention,
la figure 2, un schéma présentant une serrure verrouillée,
la figure 3, une porte illustrant un système de verrouillage selon l'invention, et
la figure 4, le procédé mis en œuvre par un système de verrouillage selon l'invention.

Les éléments présents dans plusieurs figures distinctes sont affectés d'une seule et même référence.

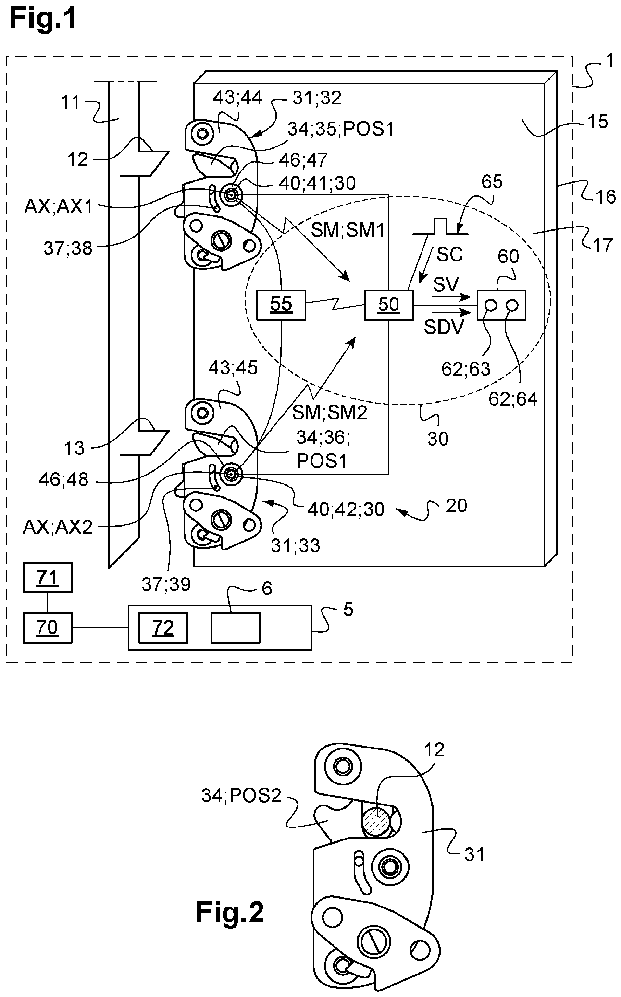

La figure 1 présente un système de verrouillage 20 selon l'invention pour verrouiller, à savoir immobiliser, une porte 15 dans une position fermée par rapport à un portant 11.

Ce système de verrouillage 20 est ainsi agencé sur une porte 15 représentée schématiquement. Cette porte 15 s'étendant selon son épaisseur d'une première face 16 à une deuxième face 17. Le système de verrouillage 20 peut être logé au moins partiellement dans l'épaisseur de la porte 15.

Une telle porte 15 peut être agencée au sein de n'importe quelle structure. Par exemple, une telle porte 15 peut équiper un aéronef 1, et par exemple un aéronef à voilure tournante. En particulier, la porte 15 peut être une porte de soute, ou encore une porte donnant accès à une cabine ou à un cockpit par exemple. La porte 15 peut être mobile par rapport au portant principalement en rotation, ou en translation selon l'exemple donné.

Quel que soit son agencement, le système de verrouillage 20 comprend au moins deux serrures 31. Les figures présentent uniquement deux serrures à titre illustratif, mais la porte peut comporter trois serrures ou plus. La référence 31 désigne n'importe quelle serrure, les références 32, 33 désignant des serrures particulières. Chaque serrure 31 a pour fonction d'immobiliser la porte 15 dans une position fermée en coopérant avec le portant 11, à savoir dans une position dans laquelle la porte 15 obture un passage. Lorsque la porte 15 est dans une position ouverte, il devient alors possible de traverser le passage.

Ainsi, chaque serrure 31 peut comprendre un organe d'immobilisation 34 mobile par rapport à un châssis 43. Un tel organe d'immobilisation a pour fonction de maintenir la porte fermée ou d'autoriser le déplacement de la porte. La référence 34 désigne n'importe quel organe d'immobilisation, les références 35, 36 désignant des organes d'immobilisation respectivement de la première serrure 32 et de la deuxième serrure 33. De même, la référence 43 désigne n'importe quel châssis, les références 44, 45 désignant des châssis respectivement de la première serrure 32 et de la deuxième serrure 33.

En particulier, chaque organe d'immobilisation 34 peut prendre la forme par exemple d'un pêne mobile en translation pour pénétrer dans une gâche solidaire du portant 11, le pêne pouvant être déplacé de manière usuelle.

Selon l'exemple illustré, chaque organe d'immobilisation 34 peut prendre la forme d'un crochet mobile en rotation autour d'un axe de rotation AX pour serrer un organe fixe 12,13 du portant 11 contre le châssis ou contre un bloc en élastomère porté par le châssis selon l'exemple illustré. Le déplacement du crochet peut être obtenu de manière usuelle, par exemple en étant du type de la serrure décrite dans le document EP4299436.

Quelle que soit la réalisation, chaque organe d'immobilisation 34 reste mobile d'une position de libération POS1 à une position de blocage POS2. Dans la position de libération POS1 illustrée sur la figure 1, l'organe d'immobilisation 34 n'est pas en prise avec un organe fixe 12,13 solidaire du portant 11. Dans la position de blocage POS2 illustrée sur la figure 2, l'organe d'immobilisation 34 est en prise avec cet organe fixe 12,13 solidaire du portant 11 pour immobiliser la porte 15 par rapport au portant 11.

Par ailleurs et en référence à la figure 1, le système de verrouillage 20 comporte un système de signalisation 30 qui a pour fonction d'indiquer si les serrures sont verrouillées ou ne sont pas verrouillées.

Dès lors, le système de signalisation 30 comporte un senseur de position 40 par serrure 31. La référence 40 désigne n'importe quel senseur de position, les références 41, 42 désignant des senseurs de position respectivement de la première serrure 32 et de la deuxième serrure 33. Par senseur, on entend ici un capteur physique capable de mesurer directement le paramètre en question, mais aussi un système pouvant comprendre un ou plusieurs capteur(s) physique(s) ainsi que des moyens de traitement du signal permettant de fournir une estimation du paramètre à partir des mesures fournies par ces capteurs physiques. Par exemple, chaque senseur de position 40 peut comprendre un capteur à effet Hall ou optique usuel.

Chaque senseur de position 40 a pour fonction d'émettre un signal de mesure SM porteur d'un état verrouillé ou d'un état déverrouillé de la serrure 31 associée en fonction de la situation courante. L'état verrouillé est atteint par une serrure 31 quand son organe d'immobilisation 34 est dans une position de blocage lui permettant d'être en prise avec un organe fixe 12,13 du portant 11, la serrure 31 étant dans l'état déverrouillé dans la négative.

Par exemple, chaque serrure 31 comporte un doigt 37 solidaire de l'organe d'immobilisation 34 de cette serrure 31. Le doigt 37 coulisse dans une fente du châssis. La référence 37 désigne n'importe quel doigt, les références 38, 39 désignant des doigts respectivement de la première serrure 32 et de la deuxième serrure 33. Chaque doigt 37 a notamment pour fonction d'identifier la position de l'organe d'immobilisation 34. Dès lors, chaque senseur de position 40 émet un signal de mesure SM porteur d'un état verrouillé quand le doigt 37 est dans la position de blocage POS2, et un signal de mesure SM porteur d'un état déverrouillé quand le doigt 37 est dans la position de libération POS1. La référence SM désigne n'importe quel signal de mesure, les références SM1, SM2, désignant les signaux de mesure émis respectivement par le premier senseur de position 41 et le deuxième senseur de position 42.

En présence d'un organe d'immobilisation 34 mobile uniquement selon un degré de liberté en rotation autour d'un arbre 46 s'étendant selon un axe de rotation AX, le senseur de position 40 peut être monté sur cet arbre 46. La référence 46 désigne n'importe quel arbre, les références 47, 48 désignant des arbres disposés selon des axes de rotation AX1, AX2 respectivement de la première serrure 32 et de la deuxième serrure 33. Par ailleurs, le châssis 43 peut comprendre une fente en arc de cercle guidant le doigt 37 de cette serrure 31.

Selon un autre aspect, le système de signalisation 30 comporte un contrôleur 50 lié par une liaison filaire ou non filaire à chaque senseur de position 40. Par exemple, le contrôleur 50 peut comporter un microcontrôleur ou tout autre dispositif alternatif.

De plus, le contrôleur 50 est lié par une liaison filaire ou non filaire à un alerteur 60 apte à générer au moins deux alertes visuellement différentes. L'alerteur 60 peut être intégré à la porte 15 ou déporté en dehors de la porte 15.

Par ailleurs, le système de verrouillage 20 peut comporter au moins une source d'énergie électrique 55 éventuellement dédiée, telle une batterie électrique, alimentant électriquement le système de signalisation 30. La source d'énergie électrique 55 peut alimenter électriquement les senseurs de position 40, et/ou le contrôleur 50, et/ou l'alerteur 60 par exemple.

Dans ce contexte, le contrôleur 50 reçoit les signaux de mesure SM. Le contrôleur 50 est alors configuré pour émettre un signal d'alerte vers l'alerteur 60. Ce signal d'alerte peut être soit un signal de déverrouillage SDV lorsqu'au moins un signal de mesure SM est porteur d'un état déverrouillé de la serrure 31 associée, soit un signal de verrouillage SV si chaque signal de mesure est porteur d'un état verrouillé de la serrure 31 associée. En réponse, l'alerteur 60 émet une alerte de déverrouillage visuelle à la suite de la réception du signal de déverrouillage et une alerte de verrouillage visuelle à la suite de la réception du signal de verrouillage, l'alerte de verrouillage étant différente de l'alerte de déverrouillage.

Pour optimiser la signalisation de l'état courant du système de verrouillage 20, l'alerteur 60 peut être visible de part et d'autre de la porte 15, par exemple en étant intégré à la porte 15 éventuellement entre la première face 16 et la deuxième face 17. Autrement dit, un individu peut visualiser l'alerte, que cet individu soit en regard de la première face 16 ou de la deuxième face 17.

Par exemple, l'alerteur 60 comporte au moins une source de lumière 62 pour générer l'alerte de verrouillage et l'alerte de déverrouillage. L'alerte de verrouillage peut prendre la forme d'une lumière d'une première couleur, par exemple de couleur verte. L'alerte de déverrouillage peut prendre la forme d'une lumière d'une deuxième couleur distincte de la première couleur, par exemple rouge. Le cas échéant, la porte 15 est percée pour que la ou les source de lumière 62 soient visibles de part et d'autre de cette porte 15.

Selon l'exemple illustré, l'alerteur 60 peut comprendre une source de lumière 63 pour émettre l'alerte de verrouillage, et au moins une source de lumière 64 pour émettre l'alerte de déverrouillage. Eventuellement, l'alerteur 60 comporte une unique source de lumière 64 qui s'allume si au moins une serrure n'est pas verrouillée, ou une source de lumière 64 par serrure qui s'allume si la serrure associée n'est pas verrouillée.

Selon une possibilité, le contrôleur 50 peut être configuré pour émettre le signal de déverrouillage et le signal de verrouillage pendant une durée prédéterminée et/ou l'alerteur est configuré pour émettre l'alerte de déverrouillage et l'alerte de verrouillage pendant la durée prédéterminée.

Par exemple, le contrôleur 50 est configuré pour émettre le signal de déverrouillage et le signal de verrouillage à la suite d'une modification d'un signal de mesure, à savoir lorsque l'état porté par un signal de mesure change. Autrement dit, si une serrure 31 passe d'un état verrouillé à un état déverrouillé, ou l'inverse, le contrôleur 50 pilote l'alerteur 60 pour afficher une alerte.

Selon une possibilité, le système de signalisation 30 peut comporter au moins une interface homme-machine 65 en communication filaire ou non filaire avec le contrôleur 50. L'interface homme-machine 65 peut être portée par la porte, ou peut être déportée. Par exemple, l'interface homme-machine 65 comporte un bouton, un pavé tactile, une interface vocale ou autres, ces exemples étant simplement donnés dans un but illustratif. Lorsqu'un opérateur sollicite cette interface homme-machine 65, le contrôleur 50 est configuré pour émettre le signal d'alerte vers l'alerteur 60. À tout moment, un opérateur peut alors vérifier si la porte 15 est verrouillée ou n'est pas verrouillée.

Selon un autre aspect, le système de verrouillage 20 peut être autonome et indépendant.

Par exemple, le système de signalisation 30 peut être indépendant d'un système avionique 5 de l'aéronef 1. Alternativement, le contrôleur 50 peut transmettre un signal d'alerte à un alerteur additionnel 6 du système avionique 5.

Selon un autre aspect, la porte peut comporter un système de détection de fermeture muni d'un senseur de fermeture 70 communiquant avec un générateur d'alerte 71 indépendant et/ou avec un générateur d'alerte 72 du système avionique 5. Le système de détection de fermeture peut être indépendant du système de signalisation, et/ou peut être relié au système avionique de l'aéronef.

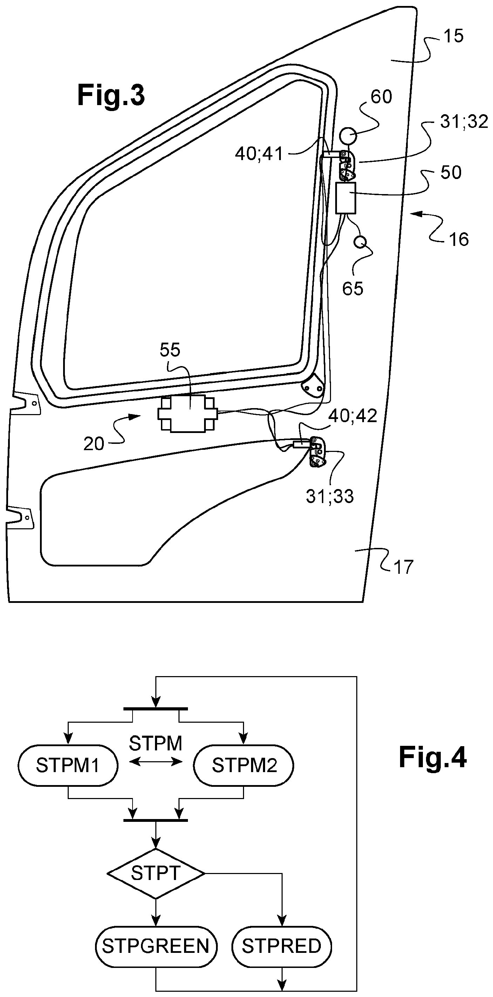

La figure 3 illustre une porte 15 munie d'un système de verrouillage 20 selon l'invention.

La figure 4 illustre le procédé appliqué par le système de verrouillage 20.

Durant une étape de mesure STPM, chaque senseur de position 40 émet un signal de mesure SM vers le contrôleur 50. Selon l'exemple illustré, le premier senseur de position 41 émet un premier signal de mesure SM1 durant une première étape STPM1, et le deuxième senseur de position 42 émet un deuxième signal de mesure SM2 durant une deuxième étape STPM2.

Durant une étape de test STPT, le contrôleur 50 détermine si au moins un signal de mesure est porteur d'un état déverrouillé de la serrure 31 associée.

Dans l'affirmative, le contrôleur 50 émet, durant une étape STPRED, un signal d'alerte de type signal de déverrouillage vers l'alerteur 60 qui génère en conséquence une alerte de déverrouillage.

Dans la négative, le contrôleur 50 émet, durant une étape STPGREEN, un signal d'alerte de type signal de verrouillage vers l'alerteur 60 qui génère en conséquence une alerte de verrouillage. Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Système de verrouillage (20) pour verrouiller une porte (15) dans une position fermée par rapport à un portant (11), le système de verrouillage (20) comprenant au moins deux serrures (31) aptes chacune à immobiliser la porte (15) dans la position fermée, le système de verrouillage (20) ayant un système de signalisation (30),
le système de signalisation (30) comportant un senseur de position (40) par serrure (31), chaque senseur de position (40) émettant un signal de mesure (SM) porteur d'un état verrouillé ou d'un état déverrouillé de la serrure (31) associée, le système de signalisation (30) comportant un contrôleur (50) recevant les signaux de mesure (SM) et connecté à un alerteur (60), le contrôleur (50) étant configuré pour émettre soit un signal de déverrouillage (SDV) lorsqu'au moins un signal de mesure est porteur d'un état déverrouillé de la serrure associée soit un signal de verrouillage (SV) si chaque signal de mesure est porteur d'un état verrouillé de la serrure associée, l'alerteur (60) générant une alerte de déverrouillage visuelle suite à la réception du signal de déverrouillage et une alerte de verrouillage visuelle suite à la réception du signal de verrouillage, l'alerte de verrouillage étant différente de l'alerte de déverrouillage,
**caractérisé en ce que** chaque serrure (31) comporte un organe d'immobilisation (34) solidaire d'un doigt (37) coulissant dans une fente d'un châssis (43) de la serrure (31), l'organe d'immobilisation (34) et le doigt (37) étant uniquement mobiles par rapport au châssis (43) entre une position de libération (POS1) et une position de blocage (POS2), chaque senseur de position (40) émettant un signal de mesure porteur d'un état verrouillé quand le doigt (37) est dans la position de blocage (POS2) et émettant un signal de mesure porteur d'un état déverrouillé quand le doigt (37) est dans la position de libération (POS1).

2. Système de verrouillage selon la revendication 1,
**caractérisé en ce que** chaque serrure (31) comporte un arbre (46) s'étendant selon un axe de rotation (AX) de l'organe d'immobilisation, et le senseur de position (40) d'une serrure (31) est monté sur l'arbre (45) de cette serrure (31).

3. Système de verrouillage selon l'une quelconque des revendications 1 à 2,
**caractérisé en ce que** l'alerteur (60) comporte au moins une source de lumière (62) pour générer l'alerte de verrouillage et l'alerte de déverrouillage, l'alerte de verrouillage prenant la forme d'une lumière d'une première couleur et l'alerte de déverrouillage prenant la forme d'une lumière d'une deuxième couleur différente de la première couleur.

4. Système de verrouillage selon l'une quelconque des revendications 1 à 3,
**caractérisé en ce que** le système de verrouillage (20) comporte une source d'énergie électrique (55) dédiée alimentant électriquement le système de signalisation (30).

5. Système de verrouillage selon l'une quelconque des revendications 1 à 4,
**caractérisé en ce que** le système de verrouillage (20) est autonome et indépendant.

6. Système de verrouillage selon l'une quelconque des revendications 1 à 5,
**caractérisé en ce que** le contrôleur (50) est configuré pour émettre le signal de déverrouillage et le signal de verrouillage pendant une durée prédéterminée.

7. Système de verrouillage selon l'une quelconque des revendications 1 à 6,
**caractérisé en ce que** le système de signalisation (30) comporte au moins une interface homme-machine (65) en communication avec le contrôleur (50), le contrôleur (50) étant configuré pour émettre le signal de déverrouillage et le signal de verrouillage à la suite d'une manœuvre de l'interface homme-machine (65).

8. Système de verrouillage selon l'une quelconque des revendications 1 à 7,
**caractérisé en ce que** le contrôleur (50) est configuré pour émettre le signal de déverrouillage et le signal de verrouillage à la suite d'une modification d'un signal de mesure.

9. Porte (15) munie d'un système de verrouillage (20),
**caractérisée en ce que** le système de verrouillage (20) est selon l'une quelconque des revendications 1 à 8.

10. Porte selon la revendication 9,
**caractérisée en ce que** l'alerteur (60) est visible de part et d'autre de la porte (15).

11. Porte selon l'une quelconque des revendications 9 à 10,
**caractérisée en ce que** la porte comporte un système de détection de fermeture muni d'un senseur de fermeture (70) communiquant avec un générateur d'alerte (71, 72).

12. Aéronef (1),
**caractérisé en ce que** ledit aéronef (1) comporte une porte (15) selon l'une quelconque des revendications 9 à 11.

13. Aéronef selon la revendication 12,
**caractérisé en ce que** le système de signalisation (30) est indépendant d'un système avionique (5) de l'aéronef (1).

## Patentansprüche

1. Verriegelungssystem (20) zum Verriegeln einer Tür (15) in einer geschlossenen Position relativ zu einem Träger (11), wobei das Verriegelungssystem (20) mindestens zwei Schlösser (31) umfasst, die jeweils dazu ausgelegt sind, die Tür (15) in der geschlossenen Position zu arretieren, wobei das Verriegelungssystem (20) ein Signalisierungssystem (30) aufweist, wobei das Signalisierungssystem (30) pro Schloss (31) einen Positionssensor (40) umfasst, wobei jeder Positionssensor (40) ein Messsignal (SM) aussendet, das einen verriegelten oder einen entriegelten Zustand des zugehörigen Schlosses (31) angibt, wobei das Signalisierungssystem (30) eine Steuereinheit (50) umfasst, die die Messsignale (SM) empfängt und mit einer Warnvorrichtung (60) verbunden ist, wobei die Steuereinheit (50) konfiguriert ist, um entweder ein Entriegelungssignal (SDV) auszusenden, wenn mindestens ein Messsignal einen entriegelten Zustand des zugehörigen Schlosses anzeigt, oder ein Verriegelungssignal (SV), wenn jedes Messsignal einen verriegelten Zustand des zugehörigen Schlosses anzeigt, wobei die Warnvorrichtung (60) nach dem Empfang des Entriegelungssignals einen visuellen Entriegelungsalarm und nach dem Empfang des Verriegelungssignals einen visuellen Verriegelungsalarm auslöst, wobei sich der Verriegelungsalarm vom Entriegelungsalarm unterscheidet,
**dadurch gekennzeichnet, dass** jedes Schloss (31) ein Feststellelement (34) aufweist, das fest mit einem Finger (37) verbunden ist, der in einem Schlitz eines Rahmens (43) des Schlosses (31) gleitet, wobei das Feststellelement (34) und der Finger (37) relativ zum Rahmen (43) ausschließlich zwischen einer Freigabestellung (POS1) und einer Verriegelungsstellung (POS2) beweglich sind, wobei jeder Positionssensor (40) ein Messsignal aussendet, das einen verriegelten Zustand anzeigt, wenn sich der Finger (37) in der Verriegelungsstellung (POS2) befindet, und ein Messsignal aussendet, das einen entriegelten Zustand anzeigt, wenn sich der Finger (37) in der Freigabestellung (POS1) befindet.

2. Verriegelungssystem nach Anspruch 1,
**dadurch gekennzeichnet, dass** jedes Schloss (31) eine Welle (46) aufweist, die sich entlang einer Drehachse (AX) des Feststellelements erstreckt, und der Positionssensor (40) eines Schlosses (31) auf der Welle (45) dieses Schlosses (31) angebracht ist.

3. Verriegelungssystem nach einem der Ansprüche 1 bis 2,
**dadurch gekennzeichnet, dass** die Warnvorrichtung (60) mindestens eine Lichtquelle (62) zur Erzeugung des Verriegelungs- und des Entriegelungsalarms umfasst, wobei der Verriegelungsalarm die Form eines Lichts einer ersten Farbe und der Entriegelungsalarm die in Form eines Lichts einer zweiten Farbe hat, die sich von der ersten Farbe unterscheidet.

4. Verriegelungssystem nach einem der Ansprüche 1 bis 3,
**dadurch gekennzeichnet, dass** das Verriegelungssystem (20) eine eigene Stromquelle (55) umfasst, die das Signalisierungssystem (30) elektrisch versorgt.

5. Verriegelungssystem nach einem der Ansprüche 1 bis 4,
**dadurch gekennzeichnet, dass** das Verriegelungssystem (20) autonom und unabhängig ist.

6. Verriegelungssystem nach einem der Ansprüche 1 bis 5,
**dadurch gekennzeichnet, dass** die Steuereinheit (50) konfiguriert ist, um das Entriegelungssignal und das Verriegelungssignal für eine vorgegebene Dauer auszusenden.

7. Verriegelungssystem nach einem der Ansprüche 1 bis 6,
**dadurch gekennzeichnet, dass** das Signalisierungssystem (30) mindestens eine Mensch-Maschine-Schnittstelle (65) umfasst, die mit der Steuereinheit (50) in Verbindung steht, wobei die Steuereinheit (50) konfiguriert ist, um das Entriegelungssignal und das Verriegelungssignal nach einer Betätigung der Mensch-Maschine-Schnittstelle (65) auszusenden.

8. Verriegelungssystem nach einem der Ansprüche 1 bis 7,
**dadurch gekennzeichnet, dass** die Steuereinheit (50) konfiguriert ist, um das Entriegelungssignal und das Verriegelungssignal infolge einer Änderung eines Messsignals auszugeben.

9. Tür (15) mit einem Verriegelungssystem (20),
**dadurch gekennzeichnet, dass** das Verriegelungssystem (20) nach einem der Ansprüche 1 bis 8 ist.

10. Tür nach Anspruch 9,
**dadurch gekennzeichnet, dass** die Warnvorrichtung (60) von beiden Seiten der Tür (15) sichtbar ist.

11. Tür nach einem der Ansprüche 9 bis 10,
**dadurch gekennzeichnet, dass** die Tür ein Schließerfassungssystem aufweist, das mit einem Schließsensor (70) ausgestattet ist, der mit einem Alarmgeber (71, 72) in Verbindung steht.

12. Luftfahrzeug (1),
**dadurch gekennzeichnet, dass** das Luftfahrzeug (1) eine Tür (15) nach einem der Ansprüche 9 bis 11 aufweist.

13. Luftfahrzeug nach Anspruch 12,
**dadurch gekennzeichnet, dass** das Signalisierungssystem (30) unabhängig von einem Avioniksystem (5) des Luftfahrzeugs (1) ist.

## Claims

1. Lock system (20) to lock a door (15) in a closed position with respect to a rack (11), the lock system (20) comprising at least two locks (31), each capable of immobilising the door (15) in the closed position, the lock system (20) having an indication system (30), the indication system (30) having one position sensor (40) per lock (31), each position sensor (40) transmitting a measuring signal (SM) carrying a locked state or an unlocked state of the associated lock (31), the indication system (30) having a controller (50) receiving the measuring signals (SM) and connected to an alerter (60), the controller (50) being configured to transmit either an unlock signal (SDV) when at least one measuring signal carries an unlocked state of the associated lock, or a lock signal (SV), if each measuring signal carries a locked state of the associated lock, the alerter (60) generating a visual unlock alert following the receiving of the unlock signal and a visual lock alert following the receiving of the lock signal, the lock alert being different from the unlock alert, **characterised in that** each lock (31) has an immobilisation member (34) secured to a finger (37) sliding in a slot of a chassis (43) of the lock (31), the immobilisation member (34) and the finger (37) being only moveable with respect to the chassis (43) between a release position (POS1) and a blocking position (POS2), each position sensor (40) transmitting a measuring signal carrying a locked state when the finger (37) is in the blocking position (POS2), and transmitting a measuring signal carrying an unlocked state when the finger (37) is in the release position (POS1).

2. Lock system according to claim 1,
**characterised in that** each lock (31) has a shaft (46) extending along an axis of rotation (AX) of the immobilisation member, and the position sensor (40) of a lock (31) is mounted on the shaft (45) of this lock (31).

3. Lock system according to any one of claims 1 to 2,
**characterised in that** the alerter (60) has at least one light source (62) to generate the lock alert and the unlock alert, the lock alert taking the form of a light of a first colour, and the unlock alert taking the form of a light of a second colour, different from the first colour.

4. Lock system according to any one of claims 1 to 3,
**characterised in that** the lock system (20) has a dedicated electrical energy source (55), electrically powering the indication system (30).

5. Lock system according to any one of claims 1 to 4,
**characterised in that** the lock system (20) is autonomous and independent.

6. Lock system according to any one of claims 1 to 5,
**characterised in that** the controller (50) is configured to transmit the unlock signal and the lock signal for a predetermined duration.

7. Lock system according to any one of claims 1 to 6,
**characterised in that** the indication system (30) has at least one man-machine interface (65) in communication with the controller (50), the controller (50) being configured to transmit the unlock signal and the lock signal, following a motion of the man-machine interface (65).

8. Lock system according to any one of claims 1 to 7,
**characterised in that** the controller (50) is configured to transmit the unlock signal and the lock signal, following a modification of a measuring signal.

9. Door (15) provided with a lock system (20),
**characterised in that** the lock system (20) is according to any one of claims 1 to 8.

10. Door according to claim 9,
**characterised in that** the alerter (60) can be seen on either side of the door (15).

11. Door according to any one of claims 9 to 10,
**characterised in that** the door has a closure detection system provided with a closure sensor (70) communicating with an alert generator (71, 72).

12. Aircraft (1),
**characterised in that** said aircraft (1) has a door (15) according to any one of claims 9 to 11.

13. Aircraft according to claim 12,
**characterised in that** the indication system (30) is independent from an avionic system (5) of the aircraft (1).
